# EUROPÄISCHE PATENTANMELDUNG

(11) **EP 1 698 873 A1**
(43) Veröffentlichungstag der Anmeldung: **06.09.2006**
(21) Anmeldenummer: 06001587.2
(22) Anmeldetag: 26.01.2006
(51) Int. Cl.: G01J 5/10, G01J 5/16, G01J 5/20

(54) **Verfahren und Vorrichtung zum Aufnehmen eines Wärmebildes**

(30) Priorität: 03.03.2005 DE 102005010986
(71) Anmelder: Carl Zeiss Optronics GmbH, 73447 Oberkochen (DE)
(72) Erfinder: Wiedmann, Wolfgang, 73457 Essingen (DE); Vogel, Holger, Dr., 73432 Aalen (DE)
(74) Vertreter: Duhme, Torsten

(57) **Zusammenfassung**

Ein Wärmebild (36) wird mit Hilfe eines Wärmebilddetektors (12) aufgenommen, der zumindest ein für Wärmestrahlung (16) empfindliches Detektorelement (14) und einen Eingang (20) für zumindest ein Quellensignal (22) aufweist. Das Detektorelement (14) liefert ein Ausgangssignal (18), das von der Wärmestrahlung (16), dem Quellensignal (22) und von einer Eigentemperatur (ϑ_{D}) des Detektorelements (14) abhängt. Gemäß einem Aspekt der Erfindung wird das Quellensignal (22) in Abhängigkeit von der Eigentemperatur (ϑ_{D}) des Detektorelements (14) variiert, so dass die Abhängigkeit des Ausgangssignals (18) von der Eigentemperatur (ϑ_{D}) zumindest weitgehend kompensiert wird (Fig. 1).

## Beschreibung

Die vorliegende Erfindung betrifft ein Verfahren zum Aufnehmen eines Wärmebildes mit Hilfe eines Wärmebilddetektors, der zumindest ein für Wärmestrahlung empfindliches Detektorelement sowie einen Eingang für zumindest ein Quellensignal aufweist, wobei das Detektorelement ein Ausgangssignal liefert, das von der Wärmestrahlung, dem Quellensignal und von einer Eigentemperatur des Detektorelements abhängt.

Die Erfindung betrifft ferner eine Vorrichtung zum Aufnehmen eines Wärmebildes, mit einem Wärmebilddetektor, der zumindest ein für Wärmestrahlung empfindliches Detektorelement sowie einen Eingang für zumindest ein Quellensignal aufweist, wobei das Detektorelement ein Ausgangssignal liefert, das von der Wärmestrahlung, dem Quellensignal und von einer Eigentemperatur des Detektorelements abhängt.

Ein solches Verfahren und eine solche Vorrichtung sind beispielsweise aus US 6,791,085 B2 bekannt.

Die bekannte Vorrichtung beinhaltet als Wärmebilddetektor beispielsweise ein oder mehrere sogenannte Mikrobolometer. Hierbei handelt es sich um resistive Wärmebilddetektoren, deren Ohmscher Widerstand sich in Abhängigkeit von der auftreffenden Wärmestrahlung ändert. Die Widerstandsänderung wird üblicherweise mit Hilfe eines Stroms gemessen, dessen Höhe sich mit dem Widerstand des Detektors verändert. Um den Strom zu erzeugen, wird das Detektorelement mit (zumindest) einer definierten Quellenspannung versorgt. Diese Quellenspannung ist ein Quellensignal im Sinne der vorliegenden Erfindung. Der genannte Strom ist ein Ausgangssignal im Sinne der vorliegenden Erfindung.

Die Erfindung ist allerdings nicht auf diese speziellen Signale und auch nicht auf Mikrobolometer als Wärmebilddetektoren beschränkt. Sie kann grundsätzlich auch bei anderen Arten von Wärmebilddetektoren eingesetzt werden, die ein Ausgangssignal liefern, welches von mehreren Faktoren einschließlich der eingangs genannten Faktoren abhängt.

Es ist bekannt, dass sich der Widerstandswert eines Mikrobolometers oder eines anderen für Wärmestrahlung empfindlichen Detektorelements nicht nur in Abhängigkeit von der auftreffenden Wärmestrahlung, sondern auch in Abhängigkeit von der Eigentemperatur des Detektorelements verändert. Um Messfehler zu reduzieren, die aus einer Veränderung der Eigentemperatur resultieren, kann man versuchen, das Detektorelement auf einer gleichbleibenden Eigentemperatur zu halten. Hierzu sind jedoch aufwändige Kühlmechanismen erforderlich. Um diese zu vermeiden, ist es ferner bekannt, Kompensationselemente und/oder -schaltungen einzusetzen, die Änderungen des Ausgangssignals in Abhängigkeit von der Eigentemperatur des Detektorelements ausgleichen sollen.

In der eingangs genannten US 6,791,085 B2 wird ein Kompensationsmodul mit einem ersten und einem zweiten Schaltungszweig vorgeschlagen. Der erste Schaltungszweig dient dazu, Messfehler zu reduzieren, die aus dem Aufheizen des Detektorelements resultieren. Der zweite Schaltungszweig dient dazu, Temperaturschwankungen über einer Vielzahl von Detektorelementen, die in einer flächigen Anordnung verteilt sind, auszugleichen.

Aus US 6,346,703 B1 ist ein Detektorelement in Form eines resistiven Bolometers bekannt, bei dem zusätzlich zu dem eigentlichen Detektorelement drei weitere Widerstände als Kompensationswiderstände verwendet werden. Das Detektorelement und die drei Kompensationswiderstände sind in einer Brückenschaltung angeordnet, wodurch Messfehler aufgrund veränderlicher Umgebungstemperaturen ausgeglichen werden sollen.

Eine ähnliche Anordnung ist ferner aus US 6,717,228 B2 bekannt. In diesem Fall ist das Kompensationselement unmittelbar neben dem Detektorelement auf einem Siliziumsubstrat angeordnet.

Darüber hinaus ist es bekannt, die Ausgangssignale einer Vielzahl von nebeneinander angeordneten Detektorelementen mit Hilfe von Korrekturwerten aus einem Speicher aneinander anzugleichen. Hierdurch sollen Fertigungstoleranzen und andere Einflüsse, die die Gleichförmigkeit der Detektorelemente beeinträchtigen, reduziert werden. Ein Beispiel für eine solche Korrektur ist in US 2002/0166968 A1 beschrieben.

Vorschläge, um die Abhängigkeit der Ausgangssignale von wärmestrahlungsempfindlichen Detektorelementen von der Umgebungstemperatur zu reduzieren und/oder zu eliminieren, sind darüber hinaus schon lange bekannt. Verwiesen sei beispielsweise auf US 728,774, US 881,575 oder US 3,105,905.

Allen bislang bekannten Ansätzen zur Temperaturkompensation bei Wärmebilddetektoren ist gemeinsam, dass sie einen relativ hohen, ergänzenden Schaltungsaufwand erfordern. Darüber hinaus werden in der Praxis häufig auch relativ aufwändige Maßnahmen zur Temperaturstabilisierung ergriffen.

Vor diesem Hintergrund ist es eine Aufgabe der vorliegenden Erfindung, ein Verfahren oder eine Vorrichtung der eingangs genannten Art anzugeben, die einen geringeren Schaltungs- und/oder Regelungsaufwand erfordern und die trotzdem über einen großen Arbeitsbereich hinweg die Aufnahme von Wärmebildern mit hoher Genauigkeit ermöglichen.

Diese Aufgabe nach einem Aspekt der Erfindung wird durch ein Verfahren der eingangs genannten Art gelöst, mit den Schritten:
- Bereitstellen eines ersten Datensatzes, der die Abhängigkeit des Ausgangssignals von der Eigentemperatur des Detektorelements repräsentiert,
- Bereitstellen eines zweiten Datensatzes, der die Abhängigkeit des Ausgangssignals von dem Quellensignal repräsentiert,
- Bestimmen der Eigentemperatur des Detektorelements, und
- Variieren des Quellensignals in Abhängigkeit von der Eigentemperatur des Detektorelements derart, dass die Abhängigkeit des Ausgangssignals von der Eigentemperatur des Detektorelements zumindest weitgehend kompensiert wird.

Die Aufgabe wird nach einem weiteren Aspekt der Erfindung durch eine Vorrichtung der eingangs genannten Art gelöst, mit einem Speicher zum Bereitstellen eines ersten Datensatzes, der die Abhängigkeit des Ausgangssignals von der Eigentemperatur des Detektorelements repräsentiert, einem Speicher zum Bereitstellen eines zweiten Datensatzes, der die Abhängigkeit des Ausgangssignals von dem Quellensignal repräsentiert, einem Temperaturfühler, um zumindest die Eigentemperatur des Detektorelements zu bestimmen, und einem Aktor zum Variieren des Quellensignals in Abhängigkeit von der Eigentemperatur des Detektorelements derart, dass die Abhängigkeit des Ausgangssignals von der Eigentemperatur des Detektorelements zumindest weitgehend kompensiert wird. Die beiden Datensätze können dabei auch in einem gemeinsamen Speicher bereitgestellt sein, insbesondere als ein Datensatz, der eine Abhängigkeit des Quellensignals von der Eigentemperatur des Detektorelements repräsentiert.

Die vorliegende Erfindung beruht damit auf der Idee, die verschiedenen Abhängigkeiten des Ausgangssignals eines für Wärmestrahlung empfindlichen Detektorelements zu nutzen, um Änderungen des Ausgangssignals aufgrund von Umgebungseinflüssen zu kompensieren. Es ist also nicht mehr notwendig, allerdings weiterhin und ergänzend möglich, zusätzliche Schaltungen zur Kompensation von Umgebungseinflüssen und/oder zur Temperaturstabilisierung des Detektorelements vorzusehen. Es werden nun jedoch die Schwankungen des Ausgangssignals, die aus einer Veränderung der Umgebungsbedingungen resultieren, durch geeignetes Nachstellen des Quellensignals ausgeglichen. So kann beispielsweise bei einem resistiven Bolometer die Quellenspannung reduziert werden, wenn der Ausgangsstrom aufgrund einer Eigenerwärmung des Bolometers angestiegen ist. Im Gegensatz dazu halten die bekannten Verfahren und Vorrichtungen das Quellensignal in aller Regel konstant, und sie versuchen die durch Eigenerwärmung des Detektorelements hervorgerufenen Messabweichungen an anderer Stelle und auf andere Weise zu korrigieren.

Die neue Vorgehensweise benötigt keine aufwändigen Stabilisierungs- und Kompensationsschaltungen. Es genügt vielmehr, die an sich vorhandenen Abhängigkeiten des Ausgangssignals von den verschiedenen Einflussgrößen zu analysieren, um das ohnehin benötigte Quellensignal so einzustellen (zu variieren), dass Schwankungen aufgrund von Umgebungseinflüssen reduziert, wenn nicht gar beseitigt werden. Zur praktischen Realisierung können die genannten Datensätze aufgenommen und in einer Weise bereitgestellt werden, um eine Veränderung des Quellensignals in Abhängigkeit von den Umgebungsbedingungen, insbesondere der Eigentemperatur des Detektorelements, zu ermöglichen. Beispielsweise können die Datensätze in einem Mikrokontroller, einem FPGA, einem ASIC oder einem anderen "intelligenten" Bauelement bereitgestellt werden, das eine Ansteuerung der Quelle für das Quellensignal in Abhängigkeit von der Eigentemperatur des Detektorelements und in Abhängigkeit von weiteren Umgebungseinflüssen ermöglicht. Das Erhöhen oder Reduzieren des Quellensignals kann auf jede geeignete Art und Weise erfolgen.

Die neue Vorgehensweise erfordert eine detaillierte Analyse der individuellen Abhängigkeiten des Ausgangssignals des Detektorelements. Der hierzu erforderliche Aufwand lässt sich jedoch bei der Herstellung der neuen Vorrichtung ohne weiteres automatisieren. Andererseits kommen die neue Vorrichtung und das neue Verfahren ohne die aufwändigen Schaltungsmaßnahmen zur Temperaturstabilisierung oder -kompensation aus, wenngleich solche Schaltungsmaßnahmen zur weiteren Steigerung der Qualität der Wärmebilder noch zusätzlich verwendet werden können.

Insgesamt stellen das neue Verfahren und die neue Vorrichtung eine einfache und kostengünstige Möglichkeit zur Aufnahme von Wärmebildern mit ungekühlten Wärmebilddetektoren und mit hoher Genauigkeit dar. Die genannte Aufgabe ist daher vollständig gelöst.

In einer Ausgestaltung der Erfindung wird das Quellensignal ferner in Abhängigkeit von einer Umgebungstemperatur variiert.

In dieser Ausgestaltung kann ein dritter Datensatz bereitgestellt werden, der die Abhängigkeit des Quellensignals von der Umgebungstemperatur repräsentiert. Damit lassen sich Messfehler ausgleichen, die aus einer Änderung des Quellensignals abhängig von der Umgebungstemperatur resultieren. Beispielsweise lässt sich das Verhalten einer Spannungsquelle in Abhängigkeit von der Umgebungstemperatur durch einen Temperaturkoeffizienten der Spannungsquelle repräsentieren. Das Quellensignal der Spannungsquelle kann sich im Betrieb aufgrund der allgemeinen Umgebungstemperatur und aufgrund der Eigentemperatur der Spannungsquelle verändern. Wenn man diese Faktoren bei der Einstellung des Quellensignals berücksichtigt, erhält man ein noch genaueres Wärmebild der aufgenommenen Szene. Außerdem ist es mit dieser Ausgestaltung möglich, das Detektorelement unabhängig von der Umgebungstemperatur in einem optimalen Arbeitspunkt zu betreiben. Dadurch lässt sich die Ausgangssignaldynamik und die Linearität der Ausgangskennlinie des Detektorelements erhöhen.

In einer weiteren Ausgestaltung wird das Quellensignal ferner in Abhängigkeit von einer Intensität des Ausgangssignals variiert.

Mit dieser Ausgestaltung wird ein Restfehler hinsichtlich der Arbeitspunktabweichung automatisch korrigiert. Mit anderen Worten sorgt diese Ausgestaltung dafür, dass Einflüsse aus Alterung sowie eine Streuung der Eigenschaften verschiedener Detektoren und Steuerschaltungen automatisch kompensiert werden. Damit trägt diese Ausgestaltung dazu bei, jedes Detektorelement in einem optimalen Arbeitspunkt zu betreiben. Der Messbereich (Dynamikbereich für das Ausgangssignal) und die Messgenauigkeit des neuen Verfahrens und der neuen Vorrichtung sind in dieser Ausgestaltung besonders hoch.

In einer weiteren Ausgestaltung wird das Ausgangssignal mit Hilfe eines Verstärkers mit einem variablen Verstärkungsfaktor verstärkt, wobei der Verstärkungsfaktor in Abhängigkeit von der Eigentemperatur des Detektorelements variiert wird.

In dieser Ausgestaltung kann ein vierter Datensatz bereitgestellt werden, mit dessen Hilfe der Verstärkungsfaktor für das Ausgangssignal nachgeregelt wird. Dadurch wird es möglich, Inhomogenitäten des Detektor-Ausgangssignals über einen weiten Temperaturbereich hinweg relativ konstant zu halten. Infolge dessen kann bei einer nachfolgenden Non-Uniformity Correction (NUC) mit nur einem Korrekturdatensatz gearbeitet werden. Dies reduziert den Speicherbedarf und vereinfacht den Fertigungsprozess. Zudem bleibt das Übertragungsverhalten (die Signaldynamik der "Kamera" bei gleicher Temperaturdynamik der Szene) weitgehend konstant.

In einer weiteren Ausgestaltung werden der erste und der zweite Datensatz in Form einer Steuerfunktion bereitgestellt, die eine Abhängigkeit des Quellensignals von der Eigentemperatur des Detektorelements bei zumindest einem konstant angenommenen Ausgangssignal repräsentiert.

Diese Ausgestaltung ist besonders bevorzugt, um den Speicherbedarf der neuen Vorrichtung zu reduzieren. Darüber hinaus kann mit dieser Ausgestaltung auch die Verarbeitungsgeschwindigkeit gesteigert werden. Die Steuerfunktion setzt das Quellensignal direkt in eine Abhängigkeit von der Eigentemperatur des Detektorelements. Daher lässt sich das geeignete Quellensignal bei bekannter Temperatur des Detektorelements sehr schnell und sehr genau einstellen.

Es sei darauf hingewiesen, dass die Steuerfunktion dieser Ausgestaltung nicht auf eine mathematische Repräsentation beschränkt ist. Die vorstehende Ausgestaltung beinhaltet auch Realisierungen, bei denen die Steuerfunktion beispielsweise in Form einer Tabelle in einem Speicher implementiert ist, aus der sich die Abhängigkeit des Quellensignals von der Eigentemperatur des Detektorelements ergibt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung des neuen Verfahrens bzw. einer entsprechenden Vorrichtung, und
- Fig. 2: eine schematische, vereinfachte Darstellung der verschiedenen Abhängigkeiten des Ausgangssignal eines Detektorelements von Quellensignal und Eigentemperatur.

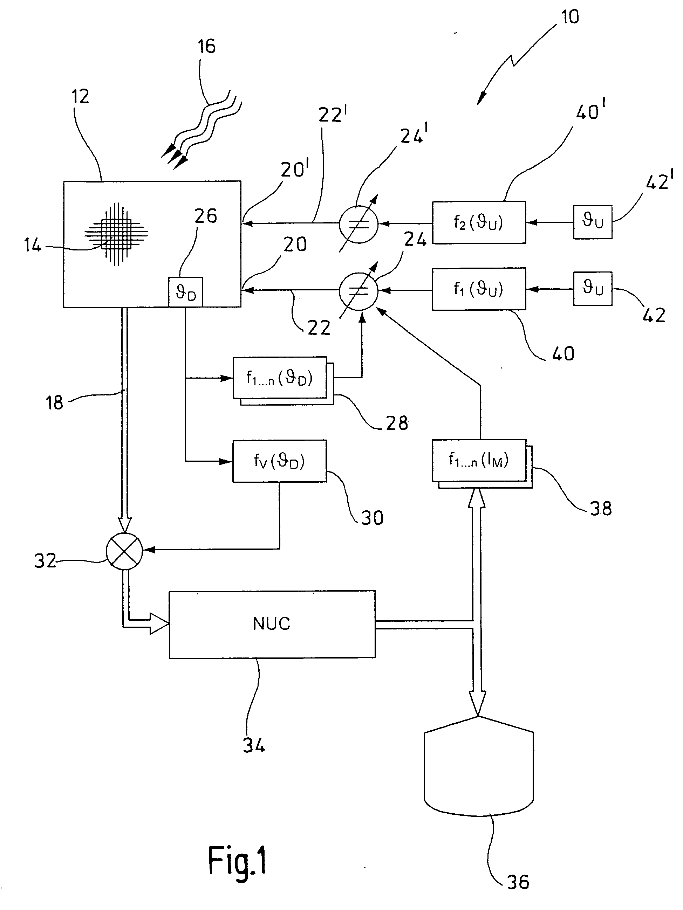

In Fig. 1 ist ein Ausführungsbeispiel der neuen Vorrichtung in seiner Gesamtheit mit der Bezugsziffer 10 bezeichnet.

Die Vorrichtung 10 beinhaltet einen Wärmebilddetektor, der beispielsweise als sogenanntes Focal Plane Array (FPA) realisiert ist. Dieser Wärmebilddetektor besitzt eine Vielzahl von Detektorelementen 14, die in einer Fläche nebeneinander angeordnet sind. Jedes Detektorelement 14 ist dazu ausgebildet, ein von der auftreffenden Wärmestrahlung 16 abhängiges Ausgangssignal zu liefern. In einem besonders bevorzugten Ausführungsbeispiel handelt es sich bei den Detektorelementen 14 um Mikrobolometer, also um resistive Elemente, deren Widerstandswert sich in Abhängigkeit von der auftreffenden Wärmestrahlung 16 verändert.

Die Ausgangssignale der Detektorelemente 14 sind über einen Signalpfad 18 einer nachfolgenden Signalverarbeitung zugeführt, die weiter unten noch näher erläutert wird.

Der Wärmebilddetektor 12 besitzt ferner einen Eingang 20 (oder mehrere entsprechende Eingänge 20, 20'), an dem ein Quellensignal 22 (bzw. 22') zuführbar ist. Das Quellensignal 22 kommt in diesem Fall von einer Spannungsquelle 24 (bzw. von weiteren Spannungsquellen 24'), d.h. in dem bevorzugten Ausführungsbeispiel ist das Quellensignal 22 eine Quellenspannung. Die Spannungsquelle 24 ist nach der vorliegenden Erfindung eine variable Spannungsquelle, d.h. sie ist in der Lage, ein veränderliches Quellensignal 22 zu erzeugen.

Mit der Bezugsziffer 26 ist ein Thermometer oder ein anderes geeignetes Element bezeichnet, mit dessen Hilfe sich die Eigentemperatur des Wärmebilddetektors 12 und/oder der Detektorelemente 14 bestimmen lässt. Das Thermometer 26 liefert ein Ausgangssignal ϑ_{D}, das in diesem Ausführungsbeispiel einem ersten Speicher 28 und einem zweiten Speicher 30 zugeführt ist. Im ersten Speicher 28 ist eine Steuerfunktion hinterlegt, die die gewünschte Abhängigkeit des Quellensignals 22 von der Eigentemperatur ϑ_{D} des Wärmebilddetektors 12 repräsentiert. Dementsprechend ist der Speicher 28 hier symbolisch mit der variablen Spannungsquelle 24 verbunden. Es versteht sich, dass diese Verbindung geeignete Elemente, wie etwa eine Steuerlogik und Verstärker oder Signalwandler beinhaltet, die eine Veränderung der Spannungsquelle 24 in Abhängigkeit von der Steuerfunktion bewirken.

Im Speicher 30 ist eine weitere Steuerfunktion hinterlegt, die in Abhängigkeit von der Eigentemperatur des Wärmebilddetektors 12 und/oder der Detektorelemente 14 einen variablen Verstärkungsfaktor festlegt, mit dem die Ausgangssignale 18 der Detektorelemente 14 in einem Verstärker 32 verstärkt werden. Sind die Ausgangssignale 18 der Detektorelemente 14 aufgrund der Eigentemperatur ϑ_{D} bereits relativ hoch, wird nur ein geringer Verstärkungsfaktor benötigt. Umgekehrt wird ein höherer Verstärkungsfaktor eingestellt, wenn die Ausgangssignale 18 der Detektorelemente 14 relativ klein sind.

Der Verstärker 32 mit variablem Verstärkungsfaktor ist bereits Bestandteil der nachfolgenden Signalverarbeitung des Wärmebilddetektors 12. Die verstärkten Ausgangssignale werden von dem Verstärker 32 einem weiteren Signalverarbeitungsschaltkreis 34 zugeführt, in dem insbesondere eine Angleichung der individuellen Eigenschaften der einzelnen Detektorelemente (non-uniformity correction) durchgeführt wird. Darüber hinaus kann der Signalverarbeitungsschalterkreis 34 weitere, an sich bekannte Signalverarbeitungsschritte beinhalten, wie beispielsweise Bildoptimierungsfunktionen, Einstellung von Helligkeit und Kontrast und anderes. Bei Bezugsziffer 36 ist das bearbeitete Wärmebild symbolisch angedeutet.

Mit der Bezugsziffer 38 ist ein weiterer Speicher bezeichnet, in dem eine weitere Steuerfunktion zum Einstellen der Spannungsquelle 24 bzw. des Quellensignals 22 hinterlegt ist. Die Steuerfunktion im Speicher 38 repräsentiert eine Abhängigkeit des Quellensignals 22 von der mittleren Intensität oder Helligkeit der Ausgangssignale der Detektorelemente 14 im Wärmebild 36.

Schließlich ist bei der Bezugsziffer 40 ein weiterer Speicher dargestellt, in dem eine Steuerfunktion hinterlegt ist, die die Abhängigkeit des Quellensignals 22 von einer allgemeinen Umgebungstemperatur ϑᵤ repräsentiert. Die Umgebungstemperatur ϑᵤ wird beispielsweise mit einem Thermometer 42 bestimmt. In der Steuerfunktion im Speicher 40 sind insbesondere die Abhängigkeiten der Spannungsquelle 24 von der Umgebungstemperatur ϑᵤ hinterlegt. Dementsprechend ist in Fig. 1 ein entsprechender Speicher 40' und ein entsprechendes Thermometer 42' für die weitere Spannungsquelle 24' dargestellt. Es versteht sich dabei, dass die weitere Spannungsquelle 24' nur stellvertretend für eine Vielzahl von möglichen weiteren Spannungsquellen steht. Es ist beispielsweise nicht ungewöhnlich, dass ein Wärmebilddetektor mit einer Vielzahl von Mikrobolometern bis zu vier Eingänge zum Anlegen von Quellensignalen 22, 22' zur Verfügung stellt. In diesem Fall können alle diese Quellensignale nach der vorliegenden Erfindung in Abhängigkeit von der Eigentemperatur des Wärmebilddetektors 12 bzw. seiner Detektorelemente 14 und/oder in Abhängigkeit der anderen hier gezeigten Stellgrößen angesteuert werden.

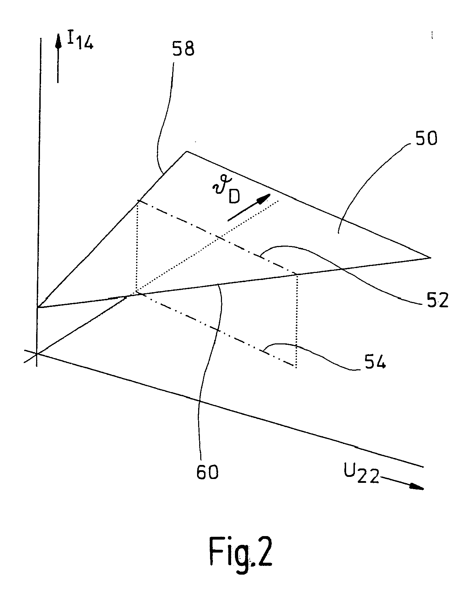

In Fig. 2 ist die Abhängigkeit des Ausgangssignals eines Detektorelements 14 von dem Quellensignal 22 und der Eigentemperatur ϑ_{D} des Detektorelements 14 in einer vereinfachten, schematischen Darstellung gezeigt. Das Ausgangssignal des Detektorelements 14 ist auf der senkrechten Koordinatenachse aufgetragen und hier mit I₁₄ bezeichnet. Eine erste Abzisse repräsentiert das Quellensignal 22 (mit U₂₂ bezeichnet), eine zweite Abzisse repräsentiert die Eigentemperatur ϑ_{D} des Detektorelements 14. Die Abhängigkeit des Ausgangssignals I₁₄ lässt sich als dreidimensionale Fläche 50 über der U₂₂-ϑ_{D}-Ebene veranschaulichen. Innerhalb dieser Ebene lassen sich Kurven konstanten Ausgangssignals I₁₄ finden, von denen beispielhaft eine bei der Bezugsziffer 52 dargestellt ist. Die Projektion der Kurve 52 in die U₂₂-ϑ_{D}-Ebene zeigt die Abhängigkeit des Quellensignals U₂₂ von der Eigentemperatur ϑ_{D} bei konstant angenommenem Ausgangssignal I₁₄, Diese Abhängigkeit (entsprechend der Projektion 54) ist bevorzugt als Steuerfunktion in dem ersten Speicher 28 hinterlegt. Verwendet der Wärmebilddetektor 12 mehrere Quellensignale 22, 22', ist bevorzugt für jede Quelle 24, 24' eine entsprechende Steuerfunktion hinterlegt. Außerdem ist es bevorzugt, wenn die Steuerfunktion für mehrere angenommene Ausgangssignale I₁₄ hinterlegt ist.

Die Funktionsweise der Vorrichtung 10 und der Ablauf des neuen Verfahrens sind wie folgt:
Zunächst werden die Eigenschaften des Wärmebilddetektors 12, genau genommen die Abhängigkeiten der Ausgangssignale der einzelnen Detektorelemente 14 über den geforderten Temperaturbereich ϑ_{D}, ermittelt. Vorzugsweise erfolgt diese Messwertaufnahme für verschiedene Quellensignale 22. Die erhaltenen Daten bilden einen ersten Datensatz im Sinne der vorliegenden Erfindung, der einer Vielzahl von Funktionswerten entlang von Parallelen zu der ϑ_{D}-Abzisse in der Darstellung in Fig. 2 entspricht. Beispielsweise bezeichnet die Bezugsziffer 58 in Fig. 2 einen ersten Datensatzes im Sinne der vorliegenden Erfindung.

Außerdem werden die Eigenschaften der Detektorelemente 14 in Abhängigkeit von den zu erwartenden Schwankungen der Quellensignale 22 aufgenommen. Ein entsprechender zweiter Datensatz ist in Fig. 2 bei der Bezugsziffer 60 symbolisch dargestellt.

Der erste und der zweite Datensatz repräsentieren gemeinsam die Abhängigkeit der Ausgangssignale der Detektorelemente 14 von den beiden Einflussfaktoren Eigentemperatur ϑ_{D} und Quellensignal 22. Aus den beiden Datensätzen lässt sich in der in Fig. 2 dargestellten Weise eine Steuerfunktion für die Spannungsquelle 24 ableiten, die dann im Speicher 28 hinterlegt wird. Mit Hilfe dieser Steuerfunktion wird das Quellensignal 22 der variablen Spannungsquelle 24 kontinuierlich oder in Zeitabständen wiederholt an Veränderungen der Eigentemperatur ϑ_{D} des Wärmebilddetektors 12 angepasst.

Außerdem wird die nachfolgende Signalverarbeitung mit Hilfe des Verstärkungsfaktors aus dem Speicher 30 Veränderungen der Eigentemperatur ϑ_{D} des Wärmebilddetektors 12 nachgeführt. Bevorzugt wird das Quellensignal 22 außerdem in Abhängigkeit von der Intensität der Ausgangssignale der Detektorelemente 14 (mit Hilfe der Steuerfunktion aus dem Speicher 38) und in Abhängigkeit von der Umgebungstemperatur ϑ_{U} so eingestellt, dass sich die Arbeitspunkte der Detektorelemente 14 jeweils in einem optimalen, möglichst linearen Bereich befinden.

Insgesamt lässt sich das neue Verfahren also folgendermaßen zusammenfassen:
1. Ermitteln der jeweiligen Umgebungsbedingungen,
2. Bestimmen von neuen Parametern für die Ansteuerung der Detektorelemente anhand der aufgenommenen ersten und zweiten Datensätze bzw. anhand der ermittelten Steuerfunktionen,
3. Anpassen der Quellensignale mit den neuen Parametern,
4. Anpassen der nachfolgenden Signalverarbeitung, die die Ausgangssignale der Detektorelemente verarbeitet, und
5. zyklische Wiederholung der Schritte 1 bis 4.

## Patentansprüche

1. Verfahren zum Aufnehmen eines Wärmebildes (36) mit Hilfe eines Wärmebilddetektors (12), der zumindest ein für Wärmestrahlung (16) empfindliches Detektorelement (14) sowie einen Eingang (20) für zumindest ein Quellenssignal (22) aufweist, wobei das Detektorelement (14) ein Ausgangssignal (18) liefert, das von der Wärmestrahlung (16), dem Quellensignal (22) und von einer Eigentemperatur (ϑ_{D}) des Detektorelements (14) abhängt, **gekennzeichnet durch** die Schritte:
- Bereitstellen eines ersten Datensatzes (58), der die Abhängigkeit des Ausgangssignals (18) von der Eigentemperatur (ϑ_{D}) des Detektorelements (14) repräsentiert,
- Bereitstellen eines zweiten Datensatzes (60), der die Abhängigkeit des Ausgangssignals (18) von dem Quellensignal (22) repräsentiert,
- Bestimmen der Eigentemperatur (ϑ_{D}) des Detektorelements (14), und
- Variieren des Quellensignals (22) in Abhängigkeit von der Eigentemperatur (ϑ_{D}) des Detektorelements (14) derart, dass die Abhängigkeit des Ausgangssignals (18) von der Eigentemperatur (ϑ_{D}) des Detektorelements (14) zumindest weitgehend kompensiert wird.

2. Verfahren nach Anspruch 1, **dadurch gekennzeichnet, dass** das Quellensignal (22) ferner in Abhängigkeit von einer Umgebungstemperatur (ϑ_{U}) variiert wird.

3. Verfahren nach Anspruch 1 oder 2, **dadurch gekennzeichnet, dass** das Quellensignal (22) ferner in Abhängigkeit von einer Intensität (38) des Ausgangssignals (18) variiert wird.

4. Verfahren nach einem der Ansprüche 1 bis 3, **dadurch gekennzeichnet, dass** das Ausgangssignal (18) mit Hilfe eines Verstärkers (32) mit einem variablen Verstärkungsfaktor verstärkt wird, wobei der Verstärkungsfaktor in Abhängigkeit von der Eigentemperatur (ϑ_{D}) des Detektorelements (14) variiert wird.

5. Verfahren nach einem der Ansprüche 1 bis 4, **dadurch gekennzeichnet, dass** der erste und der zweite Datensatz in Form einer Steuerfunktion (28) bereitgestellt werden, die eine Abhängigkeit des Quellensignals (22) von der Eigentemperatur (ϑ_{D}) des Detektorelements (14) bei zumindest einem konstant angenommenem Ausgangssignal repräsentiert.

6. Vorrichtung zum Aufnehmen eines Wärmebildes (36), mit einem Wärmebilddetektor (12), der zumindest ein für Wärmestrahlung (16) empfindliches Detektorelement (14) sowie einen Eingang (20) für zumindest ein Quellenssignal (22) aufweist, wobei das Detektorelement (14) ein Ausgangssignal (18) liefert, das von der Wärmestrahlung (16), dem Quellensignal (22) und von einer Eigentemperatur (ϑ_{D}) des Detektorelements (14) abhängt, **gekennzeichnet durch**:
- einen Speicher (28) zum Bereitstellen eines ersten Datensatzes (58), der die Abhängigkeit des Ausgangssignals (18) von der Eigentemperatur (ϑ_{D}) des Detektorelements (14) repräsentiert,
- einen Speicher (28) zum Bereitstellen eines zweiten Datensatzes (60), der die Abhängigkeit des Ausgangssignals (18) von dem Quellensignal (22) repräsentiert,
- einem Temperaturfühler (26), um zumindest die Eigentemperatur (ϑ_{D}) des Detektorelements (14) zu bestimmen, und
- einem Aktor (24) zum Variieren des Quellensignals (22) in Abhängigkeit von der Eigentemperatur (ϑ_{D}) des Detektorelements (14) derart, dass die Abhängigkeit des Ausgangssignals (18) von der Eigentemperatur (ϑ_{D}) des Detektorelements (14) zumindest weitgehend kompensiert wird.
